# EUROPEAN PATENT SPECIFICATION

(11) **EP 3 098 440 B1**
(45) Date of publication and mention of the grant of the patent: **01.07.2020**
(21) Application number: 16171158.5
(22) Date of filing: 24.05.2016
(51) Int. Cl.: F03D 1/06, B29C 65/50, B29C 65/00, B29L 31/08

(54) **A WIND TURBINE BLADE AND A METHOD OF ASSEMBLING A WIND TURBINE BLADE AND A SPAR CAP CONNECTION PIECE**
WINDTURBINENBLATT, VERFAHREN ZUR MONTAGE EINES WINDTURBINENBLATTS, UND HOLMGURTVERBINDUNGSSTÜCK
PALE DE TURBINE ÉOLIENNE, PROCÉDÉ D'ASSEMBLAGE ASSOCIÉ, ET PIÈCE DE RACCORDEMENT DE BOUCHON DE LONGERON

(30) Priority: 28.05.2015 GB 201509135
(43) Date of publication of application: 30.11.2016
(73) Proprietor: Blade Dynamics Limited, Southampton, Hampshire SO16 7NS (GB)
(72) Inventor: HAYDEN, Paul Trevor, Southampton, Hampshire SO16 7NS (GB); AVALDI, Andrea Guiseppe, 20139 IT Milan (IT)
(74) Representative: ZBM Patents - Zea, Barlocci & Markvardsen

(56) References cited:
- WO-A1-2015/003713
- WO-A2-2013/010979
- US-A1- 2006 083 907
- US-A1- 2008 069 699
- US-A1- 2010 310 379
- US-A1- 2014 271 217
- US-A1- 2014 301 855

## Description

The present invention relates to a wind turbine blade, a method of assembling a wind turbine blade and a spar cap connection piece.

In particular, it relates to a wind turbine blade comprising at least two sections which are joined together and to the manner in which they are connected.

Given the need for ever longer wind turbine blades, it is now well known to produce wind turbine blades in a number of sections which can be transported to a location close to the location of the wind turbine to which they are to be attached. The blades can then be assembled at such a location to avoid the need to transport a full length blade. The use of the smaller sections has further advantage as smaller components can be made in a more controlled process. Further, the ability to join different sections together means that more blade designs can be produced at a lower cost. For example, it becomes easier to extend a blade to improve performance.

There is a significant difference between the facilities available at such as site as compared to those which are available in the factory environment. There is therefore a need to provide joints which are straightforward to assemble in situ.

US 2006/0083907 A1 discloses a wind turbine blade comprising a connection between spar cap segments.

The applicant has appreciated that there is merit in the idea of using high performance materials and high quality production techniques in order to produce certain parts of the blade. For example, it is beneficial to produce a high quality tip section in order to reduce parasitic mass as any additional mass in the tip section generates significant loads along the remainder of the blade.

However, such materials create a problem with the manner in which these are attached to other components which are made of different materials and using different manufacturing techniques which may not be compatible with the high performance materials.

Further, the applicant is considering the possibility of producing high quality tip sections which can be fitted to blade sections made by third parties. Under the circumstances, any problems of incompatibility between sections are likely to be exacerbated.

These incompatibilities are potentially problematic as the spar caps are primarily responsible for providing the bending stiffness and strength of the blade. These highly loaded components must satisfy the bending strength and stiffness requirements to maintain the structural integrity of the blade even across transitions between potential incompatible segments.

According to the present invention there is provided a wind turbine blade according to claim 3.

By using a connection piece which can effectively provide a transition from one spar cap configuration to another, the present invention overcomes the above problems. In some cases, the spar caps may be tapered in the vicinity of the joint. In these cases, the tapered portion should be ignored when considering whether the spar caps have different cross-sectional shapes as required by the invention. Put another way, the reference to a different cross-sectional shape is a reference to the shape in addition to any tapered portions of the spar caps. The overriding consideration is that, at either end, the connection piece matches the shape of the spar cap, such that, if the spar caps have different cross-sections the size and shape of the connection piece is adapted accordingly. The connection piece can be a relatively small component which can be readily and precisely moulded in a factory environment to have the required characteristics. The piece can, if necessary, be shipped to a separate party who is responsible for making the first section. In this case, one end of the connection piece will be made to the third party specification and they can incorporate this into the spar cap of the first section as this is created. The manufacturer of the second section, for example a high quality tip component, then has significant control over the surface to which the second portion will be attached such that this can readily be done in situ.

The requirement that the material varies along the length of the connection piece may be met in a number of ways. The material may change in its chemical composition.

Alternatively, in the case of a composite, the physical make-up may change. For example, the shape and/or size of the fibres in the matrix may change from one end to the other, as may the relative concentration of fibre to matrix material. Another possibility is that as well as, or as an alternative to the above, the microstructure may be different. Thus, even if the composite constituent of the fibre and matrix are the same, and the same fibres are used throughout, the manufacturing method may mean that the microstructure of the as-processed material may be different from one end to the other.

The connection piece can be connected in a factory environment such that, when the sections are assembled, in situ, there are two high quality and well defined surfaces with which to make the join.

Even if no third party is involved, the connection piece can be useful in allowing the connection of two spars that are of otherwise incompatible material, for example when a high quality tip portion is attached to a lower quality main body portion.

The connection piece may be made with both inclined ends having the same length. However, one inclined end is preferably longer than the other. If the connection piece is being supplied for fitting by a third party, the supplying party will not have as much knowledge or control of the finish of the third party spar cap. By providing a relatively long inclined end for attachment to the spar, less accuracy is required at this end of the connection piece. This is because the third party has a larger bonding surface. Also, if the connection piece is made of fibrous layers of uniaxial fibre extending along the length of the blade, having a relatively long inclined end face means that each layer of the fibres terminates at a location which is reasonably well spaced from an adjacent layer, thereby distributing any stress concentrations over a much wider area.

The connection piece may be joined directly to the spar cap of the adjacent blade section. However, preferably, there is a double scarf component between the connection piece and the spar cap of the adjacent section. The double scarf component takes the form of a component having a wide V-shape cross-section. This is connected to an inclined end of the connection piece and an inclined end face of the adjacent spar cap which is oriented in the opposite sense from the inclined end face of the connection piece. Such a double scarf component has the advantages described in WO 2012/004571 that it provides a high bonding area and can be brought into position without disturbing the adhesive if it is a pre-cured component. Alternatively, it can readily be built up in situ from a stack of laminates.

The spar caps of one section may simply have a different width or depth as compared to the respective spar caps of the adjacent section. However, more probably, the spar caps of one section have a curved profile in cross-section to conform to the aerodynamic surface and the spar caps of the adjacent section have a flat profile in cross-section for the purposes of the field joint design.

The present invention also extends to a method of assembling a wind turbine blade according to claim 7.

The connection pieces may be directly attached to the respective spar caps of the second section. However, preferably, the connection pieces and respective shear webs in the second section present outwardly facing inclined surfaces inclined in opposite directions and a double scarf component is attached to these surfaces to complete the joint.

The present invention also extends to a spar cap according to claim 1.

Each inclined end of the connection piece may be angled at the same acute angle such that the two ends are parallel to one another. However, preferably, each inclined end is angled at a different acute angle. This allows one of the end faces to present a larger bonding surface as described above.

According to the invention, the connection piece transitions from a curved profile in cross-section at one end to a flat profile in cross-section at the opposite end.

An example of a wind turbine blade spar cap connection piece will now be described with reference to the accompanying drawings, in which:
Fig. 1 is a perspective view of a partially assembled spar between two spar sections;
Fig. 2 is a perspective view of a spar cap connection piece from the lower spar cap in Fig. 1;
Fig. 3 is a cross-sectional view through the top portion of the spar prior to assembly;
Fig. 4 is a cross-sectional view through the spar shown in Fig. 1 following completion of the connection process;
Fig. 5a shows an arrangement similar to Fig. 4 showing the cross-section through a spar cap/connection piece/double scarf component at a number of marked locations along the length of the blade showing a transition from a curved spar cap to a flat spar cap where the transition takes place between the inclined end of the connection piece;
Fig. 5b is a view similar to Fig. 5a in which the transition region extends into the tapered portion of the connection piece;
Figs. 6a - 6c are perspective views of alternative connection pieces; and
Figs. 7a and 7b are perspective views showing a full blade before and after assembly.

The wind turbine blade is made up of a number of sections connected end to end. The basic structure of the blade is, for example, as disclosed in WO 2012/004571 and WO 2009/034291. The present invention provides a new method of providing a connection between the spar caps of adjacent sections and the description below will focus on this.

The first section has a first spar section 10 extending along the length of the section to provide the structural integrity of the blade and, in particular, to resist the high bending loads which occur on the blade. The second section has a similar spar section 11. Each spar section has a shear web 12. This runs transversely across the blade section and generally comprises a composite material of multi-axial fibres.

Each spar section is completed by a spar cap 14 running along the top and bottom edges of the shear web. The spar caps 14 are a composite material generally comprising a uniaxial fibre which runs along the length of the blade.

In this particular example, the first section may be a lower quality component which forms a central or inner portion of the blade while the second portion may be a high quality tip section. The tip section may use higher quality pre-preg material, while the first section is more cost-effective vacuum assisted resin transfer moulding. The dissimilarity in the manufacturing methods makes the design of the joint between the spar sections more difficult because of the difference in the quality and properties of the spar caps. The processing temperatures of the resins may be incompatible for such a joint. For example, the transfer moulding resin requires a temperature below 80°C while the pre-preg resin requires temperatures greater than 100°C.

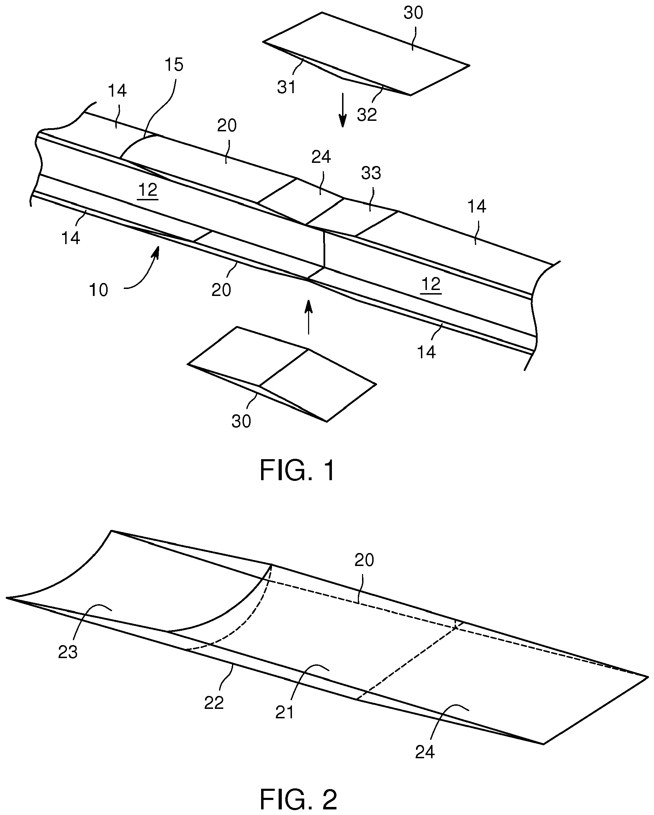

Another possibility is that the second section may be a tip with carbon fibre spar caps which are joined to a glass fibre in the spar of the first section in order to extend the blade length while maintaining the same blade mass. The difference in the spar cap materials between the stiffness, strength and thickness of the piles used in the laminate creates difficulty in matching the properties in the spar caps in the joint region. It is also possible that one of the spar sections (for example, in this case, the first spar section 12) may have a curved cross-section as depicted by line 15 in Fig. 1 while the second section may have spar caps with a flat spar cap profile.

A spar cap connection piece 20 is provided to address these issues. As shown in Fig. 1, there is one such spar cap connection piece 20 for each of the spar caps in the first spar section 12.

Fig. 2 shows in greater detail the lower spar cap connection piece 20 from Fig. 1. As can be seen, this is designed to fit generally within the same envelope as the surrounding spar caps, although, in the case of incompatible adjacent spar cap shapes, the connection piece is designed to transition from one shape to the other. The connection piece has an upper 21 and lower 22 surface which, in use, form continuations of the upper and lower surfaces respectively of the spar caps. It also has a first inclined end 23 for connection to the spar cap of the first section and a second inclined end 24 for connection (directly or indirectly) to the second spar section 11.

As best shown in Fig. 2, the first inclined end 23 has a curved shape in order to match the curved shape 15 of the spar caps 14 of the first spar section 10. The shape of the spar cap connection piece 20 then transitions to a flat shape at the second end surface 24 as shown in Fig. 2.

The first spar section 10 may be a component manufactured by a third party. In which case, they can be supplied with the spar cap connection piece 20 prior to the creation of the first spar section 10. When creating the first spar section 10, the connection piece 20 can be laid up in the moulds, whereupon the material of the spar cap is laid up over the connection piece. This provides minimal disruption to the creation of the first spar section 10, but what emerges is a spar segment with an end face 24 which is both precisely defined and is well known to the manufacture of the second spar section 11.

The spar cap connection piece 20 shown in Fig. 2 has end faces 23 and 24 which are inclined in the same sense. It is possible, however, for these faces to be inclined in the opposite end and for the connection piece to be bonded directly to the spar cap 14 of an adjacent segment. However, preferably, the joint also incorporates the double scarf joint which is the subject of WO 2012/004571. This takes the form of a double scarf component 30 as shown in Figs. 1, 3 and 4. This has a wide V-shaped cross-section with a first inclined surface 31 configured to match the first inclined end 24 of the spar cap connection piece 20. The double scarf component 30 has a second inclined surface 32 which matches the inclined end face of the spar cap 14 in the second spar cap section 11.

As shown in the drawings, the double scarf component 30 is a single pre-cured component which can be bonded onto the surfaces 24, 33. Alternatively, it may be built up in situ on these inclined surfaces.

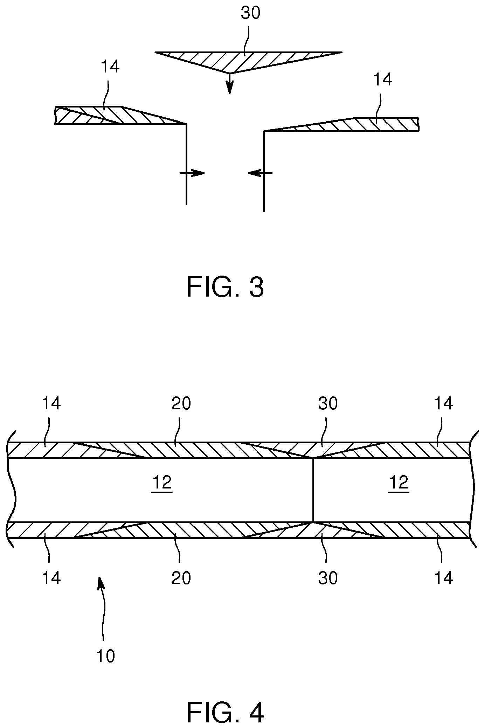

The finished joint is shown in cross-section in Fig. 4.

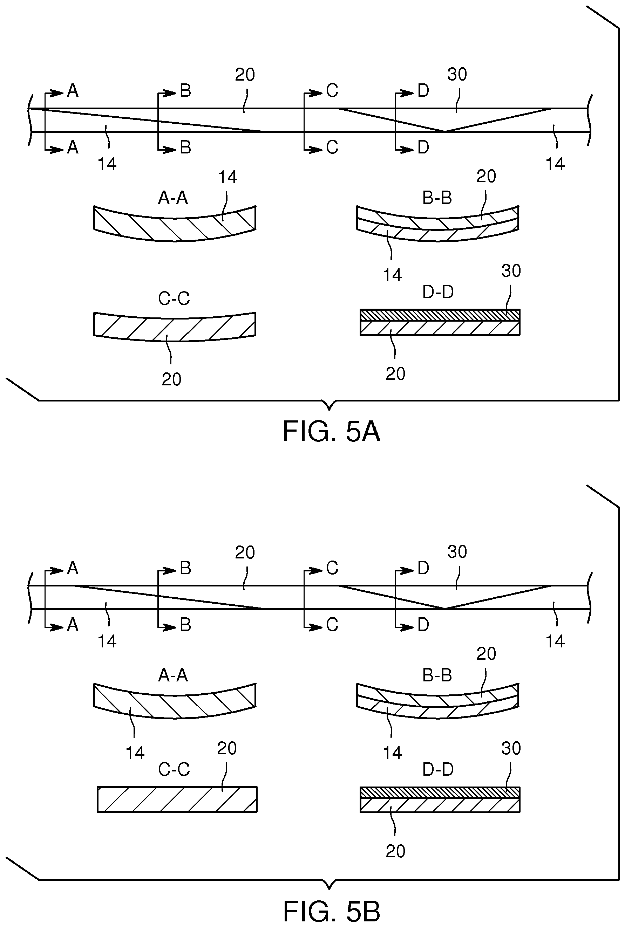

The transition from the curved spar cap 14 on one component to a flat spar cap 14 in the adjacent component can be achieved in different ways as shown in Figs. 5a and 5b. In 5a it will be appreciated that in the tapered portion of the connection portion 20 as represented by cross-section B-B, transition to the flatter cross-section has not yet started, by contrast with Fig. 5b in which a significant portion of the transition has already been completed (hence the gentler curve in cross-section). Towards the middle of the non-tapered portion of the connection piece 20 in Fig. 5a (section C-C), about half of the transition has been completed as compared to in Fig. 5b where most of the transition has been completed.

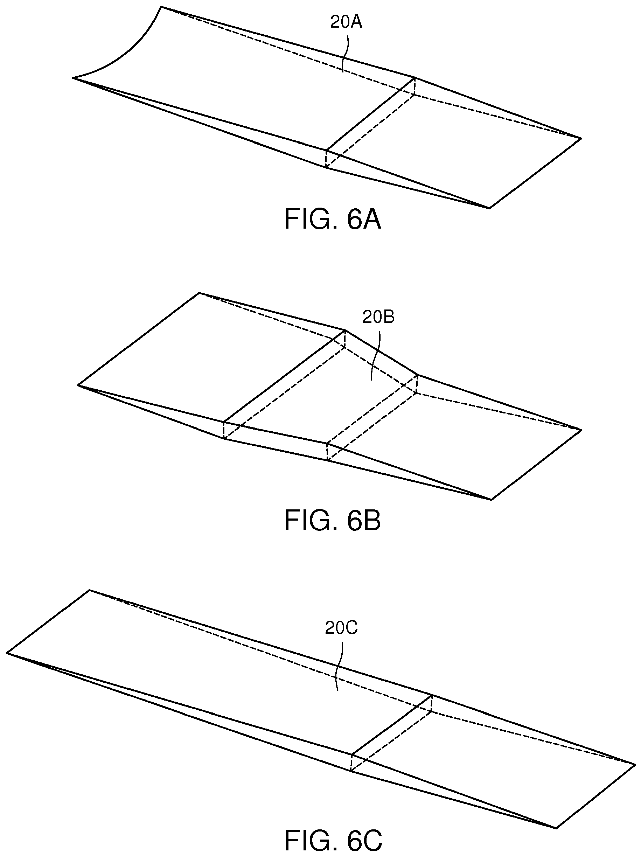

Figs. 6a to 6c show different configurations of spar cap connection piece.

The connection piece 20A shown in Fig. 6a represents a transition from a curved spar cap at the left hand end to a flat spar cap on the right hand end, but this has only two tapered portions, it does not have the non-tapered central portion of the previous example. In this case, the tapered portions may be correspondingly longer, or the transaction may be more abrupt to accommodate the lack of central portion.

In Fig. 6b, the connection piece 20B represents a transition from a flat spar cap on the left hand side to a narrower spar flat spar cap on the right hand side. A central transition region provides this width reduction. The reduction width may be accompanied by an increase in the thickness to control the cross-sectional are of the spar cap.

Fig. 6c shows a transition between two spar caps of the same shape and size. In common with Fig. 6a, this spar cap has no central untapered portion. It does, however, have a significantly longer tapered portion which may be well suited to making a connection with a third party spar cap of less good or unknown quality.

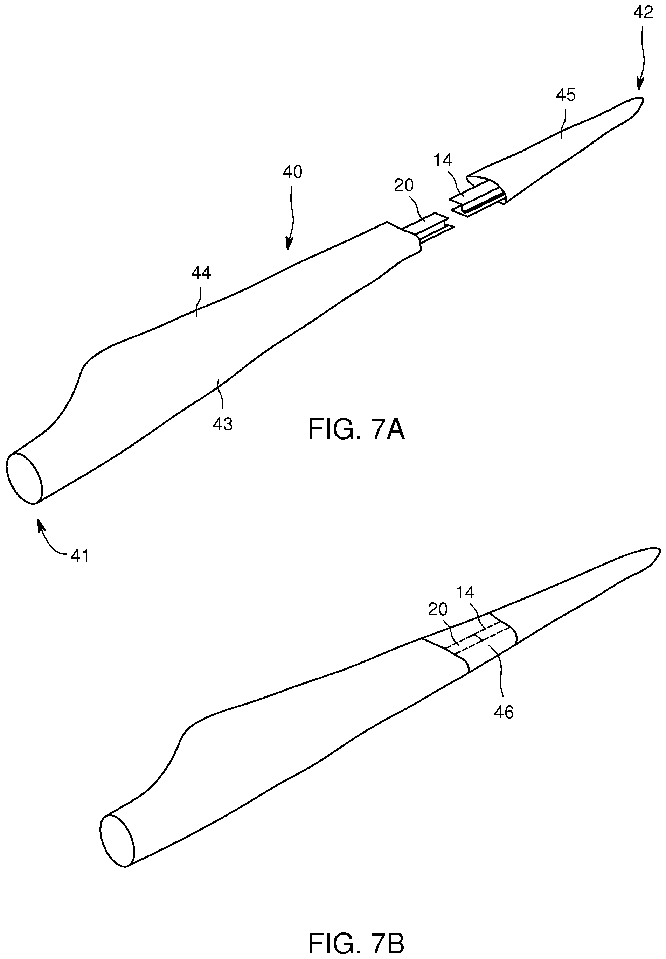

Figs. 7a and 7b show how the joint is accommodated into a blade 40 which has a hub end 41 and a tip end 42. The blade is formed of a main body 43 which extends along most of the length of the blade. As can be shown, the connection piece 20 extends from an aerodynamic fairing 44 of the root end while a spar cap 14 extends from a tip component 45. The two are brought together and connected as described with reference to the above drawings and a fairing bridging portion 46 covers the joint in this region.

## Claims

1. A spar cap connection piece (20) for a wind turbine blade comprising a pre-cured composite component comprising uniaxial fibre running along the length of the component from a first end (23) to a second end (24) in a longitudinal direction corresponding, in use, to the longitudinal direction of the spar to which it is fixed, the first and second ends (23,24) being inclined in the same sense to the longitudinal direction each at a respective acute angle; the connection piece (20) having a transition region in which the cross-sectional shape of the connection piece (20) transitions from one form to another along the transition region so that, in use, it is able to connect two spar caps (14) having a different cross-sectional shape, **characterized in that** the connection piece (20) transitions from a curved profile in cross-section at one end to a flat profile in cross-section at the opposite end.

2. A spar cap connection piece (20) according to claim 1, wherein each inclined end is angled at a different acute angle.

3. A wind turbine blade (40) comprising first and second adjacent blade sections arranged end to end along the length of the blade, each section comprising an aerodynamic fairing and a spar (10) extending along the length of the section; each spar (10) comprising a shear web extending across the fairing and a pair of spar caps (14), one at either end of the shear web; wherein each spar cap (14) in the first section has a different cross-sectional shape from the respective spar cap in the second section and wherein the spar cap (14) in the first section is joined to the respective spar cap in the second section via a connection piece (20) according to any of claims 1-2, the connection piece (20) extending along the length of the blade (40) from a first inclined end (23) configured to connect to a first complimentary inclined end of a spar cap (14) of the first blade section and a second inclined end (24) configured to connect to a second inclined end (33) of a spar cap (14) of the second blade section.

4. A blade (40) according to claim 3, wherein the first inclined end (23) of the connection piece (20) is longer than the second (24).

5. A blade (40) according to any one of claims 3 to 4, wherein there is a double scarf component (30) between the connection piece (20) and the spar cap (14) of the adjacent section.

6. A blade (40) according to claim 5, wherein the double scarf component (30) is connected to an inclined end of the connection piece (20) and an inclined end face of the adjacent spar cap (14) which is oriented in the opposite sense from the inclined end face of the connection piece (20).

7. A method of forming a wind turbine blade (40) according to any of claims 3 to 6, the method comprising attaching a connection piece (20) to each of the spar caps (14) in the first section; and subsequently attaching the connection pieces to a respective spar cap (14) of the second section.

8. A method according to claim 7, wherein the connection piece (20) and respective spar cap in the second section present outwardly facing inclined surfaces inclined in opposite directions and a double scarf component (30) is attached to these surfaces to complete the joint.

## Patentansprüche

1. Ein Gurteverbindungsteil (20) für ein Windturbinenblatt umfassend ein aus vorausgehärtetem Verbundwerkstoff bestehendes Bauelement umfassend uniaxiale Faser, welche entlang der Länge des Bauelements von einem ersten Ende (23) bis zu einem zweiten Ende (24) in einer Längsrichtung verlaufen, die im Einsatz der Längsrichtung des Holms, an dem es befestigt ist, entspricht, wobei das erste und das zweite Ende (23, 24) in der gleichen Richtung zur Längsrichtung, jeweils mit einem entsprechenden spitzen Winkel, geneigt sind; wobei das Verbindungsteil (20) einen Übergangsbereich hat, in dem das Querschnittsprofil des Verbindungsteils (20) von einer Form zu einer anderen Form entlang des Übergangsbereichs übergeht, so dass es, im Einsatz, zwei Gurte (14) unterschiedlicher Querschnittprofile verbinden kann, **dadurch gekennzeichnet, dass** das Verbindungsteil (20) von einem gekrümmten Querschnittsprofil an einem Ende zu einem flachen Querschnittsprofil am gegenüber liegenden Ende übergeht.

2. Ein Gurteverbindungsteil (20) nach Anspruch 1, wobei jedes geneigte Ende mit einem unterschiedlichen spitzen Winkel abgewinkelt ist.

3. Ein Windturbinenblatt (40) umfassend erste und zweite aneinander grenzende Blattabschnitte, die entlang der Länge des Blattes stoßverbunden sind, wobei jeder Abschnitt eine aerodynamische Verkleidung und einen Holm (10) umfasst, der sich entlang der Länge des Abschnittes erstreckt; wobei jeder Holm (10) einen Steg umfasst, der sich quer durch die Verkleidung erstreckt und ein Paar von Gurten (14), einen an jedem Ende des Stegs, umfasst; wobei jeder Gurt (14) im ersten Abschnitt ein verschiedenes Querschnittsprofil im Vergleich zum jeweiligen Gurt im zweiten Abschnitt hat und wobei der Gurt (14) im ersten Schnitt mit dem jeweiligen Gurt im zweiten Abschnitt über ein Verbindungsteil (20) nach einem der Ansprüche 1 - 2 verbunden ist, wobei das Verbindungsteil (20) sich entlang der Länge des Blattes (40) von einem ersten geneigten Ende (23), das konfiguriert ist, um mit einem ersten ergänzenden geneigten Ende eines Gurtes (14) des ersten Blattabschnittes verbunden zu werden und bis zu einem zweiten geneigten Ende (24) erstreckt, das konfiguriert ist, um mit einem zweiten geneigten Ende (33) von einem Gurt (14) des zweiten Blattabschnitts verbunden zu werden.

4. Ein Blatt (40) nach Anspruch 3, wobei das erste geneigte Ende (23) des Verbindungsteils (20) länger als das zweite (24) ist.

5. Ein Blatt (40) nach einem der Ansprüche 3 bis 4, wobei ein eine doppelte Überblattung aufweisendes Bauelement (30) zwischen dem Verbindungsteil (20) und dem Gurt (14) des angrenzenden Abschnitts vorhanden ist.

6. Ein Blatt (40) nach Anspruch 5, wobei das eine doppelte Überblattung aufweisende Bauelement (30) mit einem geneigten Ende des Verbindungsteils (20) und einer geneigten Endfläche des angrenzenden Gurtes (14) verbunden ist, welche gemäß der entgegengesetzten Richtung bezüglich der geneigten Endfläche des Verbindungsteils (20) ausgerichtet ist.

7. Ein Verfahren zur Bildung von einem Windturbinenblatt (40) nach einem der Ansprüche 3 bis 6, wobei das Verfahren folgendes umfasst: das Verbinden von einem Verbindungsstück (20) mit jeder von den Gurten (14) im ersten Abschnitt; und das darauffolgende Befestigen der Verbindungsteile mit einem jeweiligen Gurt (14) des zweiten Abschnitts.

8. Ein Verfahren nach Anspruch 7, wobei das Verbindungsteil (20) und der jeweilige Gurt im zweiten Abschnitt nach außen ausgerichtete geneigte Flächen aufweisen, die gemäß entgegengesetzten Richtungen geneigt sind und wobei ein eine doppelte Überblattung aufweisendes Bauelement (30) an diesen Flächen zur Vervollständigung der Verbindung befestigt ist.

## Revendications

1. Une pièce de connexion de capuchon de longeron (20) pour une pale d'éolienne comprenant un composant en matériau composite pré-durci comprenant de la fibre uniaxiale disposée le long de la longueur du composant allant d'une première extrémité (23) jusqu'à une seconde extrémité (24) dans une direction longitudinale correspondant, lors du fonctionnement, à la direction longitudinale du longeron auquel il est fixé, les extrémités première et seconde (23, 24) étant inclinées dans le même sens par rapport à la direction longitudinale, chacune avec un angle aigüe respectif ; la pièce de connexion (20) ayant une région de transition dans laquelle la forme en section transversale de la pièce de connexion (20) passe d'une forme à une autre forme le long de la région de transition de manière que, lors du fonctionnement, il est possible de relier deux capuchons de longeron (14) ayant une forme en section transversale différente, **caractérisée en ce que** la pièce de connexion (20) passe d'un profil courbe en section transversale dans une extrémité à un profil plate en section transversale dans l'extrémité opposée.

2. Une pièce de connexion de capuchon de longeron (20) selon la revendication 1, dans laquelle chaque extrémité inclinée est formée à angle avec un angle aigüe différent.

3. Une pale d'éolienne (40) comprenant des sections de pale adjacentes première et seconde disposées bout à bout le long de la longueur de la pale, chaque section comprenant un carénage aérodynamique et un longeron (10) s'étendant le long de la longueur de la section ; chaque longeron (10) comprenant une âme de cisaillement s'étendant à travers le carénage et une paire de capuchons de longeron (14), un à chaque extrémité de l'âme de cisaillement ; dans laquelle chaque capuchon de longeron (14) dans la première section a une forme en section transversale différente par rapport au capuchon de longeron respectif dans la seconde section et dans laquelle le capuchon de longeron (14) dans la première section est relié au capuchon de longeron respectif dans la seconde section à travers une pièce de connexion (20) selon l'une quelconque des revendications 1 - 2, la pièce de connexion (20) s'étendant le long de la longueur de la pale (40) d'une première extrémité inclinée (23) configurée pour la connexion avec une première extrémité inclinée complémentaire d'un capuchon de longeron (14) de la première section de pale et une seconde extrémité inclinée (24) configurée pour la connexion avec une seconde extrémité inclinée (33) d'un capuchon de longeron (14) de la seconde section de pale.

4. Une pale (40) selon la revendication 3, dans laquelle la première extrémité inclinée (23) de la pièce de connexion (20) est plus longue que la seconde (24).

5. Une pale (40) selon l'une quelconque des revendications 3 à 4, dans laquelle il y existe un composant à double biseau (30) entre la pièce de connexion (20) et le capuchon de longeron (14) de la section adjacente.

6. Une pale (40) selon la revendication 5, dans laquelle le composant à double biseau (30) est relié à une extrémité inclinée de la pièce de connexion (20) et une face d'extrémité inclinée du capuchon de longeron adjacent (14) qui est orientée dans le sens opposé de la face d'extrémité inclinée de la pièce de connexion (20).

7. Un procédé de formation d'une pale d'éolienne (40) selon l'une quelconque des revendications 3 à 6, le procédé comprenant attacher une pièce de connexion (20) à chacun des capuchons de longeron (14) dans la première section ; et attacher ensuite les pièces de connexion à un capuchon de longeron (14) respectif de la seconde section.

8. Un procédé selon la revendication 7, dans lequel la pièce de connexion (20) et le capuchon de longeron respectif de la seconde section présentent des surfaces inclinées orientées vers l'extérieur inclinées dans des directions opposées et un composant à double biseau (20) est attaché à ces surfaces pour compléter la jonction.
